# EUROPÄISCHE PATENTSCHRIFT

(11) **EP 3 180 240 B1**
(45) Veröffentlichungstag und Bekanntmachung des Hinweises auf die Patenterteilung: **04.09.2019**
(21) Anmeldenummer: 15733471.5
(22) Anmeldetag: 03.07.2015
(51) Int. Cl.: B63G 8/00

(54) **UNTERWASSERFAHRZEUG, VERFAHREN ZUM AUFNEHMEN EINER LAST VOM MEERESGRUND UND EIN VERFAHREN ZUM ABSETZEN EINER LAST AM MEERESGRUND**
SUBMARINE VEHICLE, METHOD FOR PICKING UP A LOAD FROM THE SEABED AND A METHOD FOR SETTING DOWN A LOAD ON THE SEABED
VÉHICULE SOUS-MARIN, PROCÉDÉ PERMETTANT DE RECEVOIR UNE CHARGE PROVENANT DU FOND MARIN ET PROCÉDÉ PERMETTANT DE DÉPOSER UNE CHARGE SUR LE FOND MARIN

(30) Priorität: 14.08.2014 DE 102014111649
(43) Veröffentlichungstag der Anmeldung: 21.06.2017
(73) Patentinhaber: ThyssenKrupp Marine Systems GmbH, 24143 Kiel (DE); thyssenkrupp AG, 45143 Essen (DE)
(72) Erfinder: BRANDT, Hendrik, 24232 Schönkirchen (DE); PANOCH, Axel, 24582 Bordesholm (DE)
(74) Vertreter: thyssenkrupp Intellectual Property GmbH
(86) Internationale Anmeldenummer: PCT/EP2015/065249
(87) Internationale Veröffentlichungsnummer: WO 2016/023676

(56) Entgegenhaltungen:
- EP-A1- 2 261 112
- EP-A2- 1 783 046
- US-A- 4 753 552
- US-B1- 6 167 831

## Beschreibung

### Stand der Technik

Die vorliegende Erfindung betrifft ein Unterwasserfahrzeug, vorzugsweise ein unbemanntes Unterwasserfahrzeug, ein Verfahren zum Aufnehmen einer Last vom Meeresgrund und ein Verfahren zum Absetzen einer Last am Meeresgrund.

Aus dem Stand der Technik sind autonom betriebene Unterwasserfahrzeuge bekannt, die vorzugsweise zu Inspektionszwecken genutzt werden. Typischerweise sind diese autonom betriebenen Unterwasserfahrzeuge beim Tauchgang hinsichtlich ihrer Interaktionsfähigkeit mit der Umgebung und ihrer Tauchzeit stark eingeschränkt.

Durch diese Einschränkungen eignen sich diese Unterwasserfahrzeuge aus dem Stand der Technik nicht, an verschiedene Zielpositionen zu fahren und dort jeweils Lasten auszutauschen. Grundsätzlich gibt es für Unterwasserfahrzeuge eine Vielzahl von potenziellen Anwendungen. Beispielsweise ist es für seismische Messungen erforderlich, am Meeresgrund möglichst flächendeckend Sensoren (z.B. seismischen Knoten) an verschiedenen Zielpositionen zu verteilen. Eine andere Anwendung für Unterwasserfahrzeuge ist das regelmäßige Austauschen von Behältern mit Betriebsstoffen an Anlagen zur Förderung von Kohlenwasserstoff. Der Stand der Technik kennt zum Austauschen von einzelnen Behältern oder zum Austauschen von Kleingruppen an Behältern ferngelenkte Unterwasserfahrzeuge, wie sie beispielsweise aus der Druckschrift US 2009/0114140 A1 bekannt sind. Ihre Reichweite ist stark eingeschränkt. Außerdem ist die effektive Nutzung abhängig von der Reaktionszeit eines das Unterwasserfahrzeug fernsteuernden Piloten und der Kommunikation zwischen Unterwasserfahrzeug und Piloten, wobei die Kommunikation in der Regel durch die beim Tauchgang erzielte Tauchtiefe erschwert wird. Infolgedessen lässt sich über die Fernsteuerung kein effektives und unkompliziertes Austauschen von Lasten realisieren. Alternativ kennt der Stand der Technik Verfahren, bei denen über Schlauchleitungen bzw. Umbilicals die Betriebsstoffe über große Entfernung zu Förder- und Produktionsstätten transportiert werden. Hier sind die Installationskosten besonders groß wenn nur geringe Mengen Betriebsstoffe benötigt werden. Zusammenfassend sind die aus dem Stand der Technik bekannten Verfahren kostenintensiv und insbesondere im Falle der ferngesteuerten Unterwasserfahrzeuge auch noch zeitintensiv.

Aus der US 4 753 552 A ist in diesem Zusammenhang ein Unterwasserfahrzeug bekannt, das sich in modularer Weise mit Transportkammern verbinden lässt. In der US 6167831 B1 wird ein Unterwasserfahrzeug beschrieben, dass sich über ein Verbindungssystem an eine Geräteeinheit ankoppeln lässt. In der EP 1 783 046 A2 wird ein Unterwasserfahrzeug mit einem Transportbehälter vorgeschlagen während aus der EP 1 783 046 A2 ein Unterwasserfahrzeug mit einem Geräteträger bekannt ist.

### Offenbarung der Erfindung

Es ist Aufgabe der vorliegenden Erfindung, eine Vorrichtung zur Verfügung zu stellen, mit der sich möglichst ökonomisch mehrere Lasten am Meeresgrund an verschiedenen Zielpositionen austauschen lassen.

Die Aufgabe der vorliegenden Erfindung wird gelöst durch ein Unterwasserfahrzeug gemäß Anspruch 1.

Im Gegensatz zum Stand der Technik weist das Unterwasserfahrzeug einen Staubereich außerhalb des Druckkörpers auf, wodurch der Staubereich entsprechend groß ausgestaltet werden kann und eine Vielzahl an Lasten gemeinschaftlich verstaut werden kann. Der Druckkörper bzw. Schwimmkörper selbst kann damit kleiner ausgestaltet werden. Durch die gesteigerte Aufnahmefähigkeit, d. h. das gegenüber dem Stand der Technik vergrößerte Fassungsvolumen, das sich durch den außerhalb des Druckkörpers angeordneten Staubereich erzielen lässt, lässt sich die Anzahl der in einem Tauchgang aufnehmbaren bzw. austauschbaren Lasten erhöhen. In vorteilhafter Weise lässt sich dadurch ein wiederholtes und damit zeit- und kostenintensives Auftauchen vermeiden. Damit kann ein effektiver Tauchgang durchgeführt werden, bei dem Lasten flächendeckend ausgetauscht werden.

Insbesondere ist das Unterwasserfahrzeug unbemannt und weist einen frei durchfluteten Staubereich bzw. einen Nasstauraum auf, der für die Aufnahme der Last vom Meeresgrund und/oder das Absetzen der Last auf dem Meeresgrund ausgerüstet ist. Weiterhin ist es vorzugsweise vorgesehen, dass wichtige Systeme durch den Druckkörper vor dem umgebenden Wasser geschützt. Dem Fachmann ist weiterhin klar, dass das Unterwasserfahrzeug auch mehrere Druckkörper aufweisen kann. Vorzugsweise ist das Unterwasserfahrzeug bereits bei Beginn des Tauchgangs mit einer Vielzahl an Lasten bestückt. Dadurch lässt sich eine Vielzahl an am Meeresgrund angeordneten Lasten austauschen. Dabei ist es vorzugsweise vorgesehen, dass Lasten jeweils an verschiedenen Zielpositionen autonom aufgenommen bzw. ausgetauscht werden, Hierbei kann es sich beispielsweise um Gerätschaft für seismische Messungen, wie beispielsweise seismische Sensoren, oder um Behälter für Betriebsstoffe, die für die Förderung von Kohlewasserstoffen handeln. Entsprechend sind seismische Knoten oder Förder- und/oder Produktionsstätten am Meeresgrund, insbesondere Unterwasserproduktionsstätten, Beispiele für Zielpositionen, die während eines Tauchgangs angefahren werden, um dort jeweils eine Last aufzunehmen und bevorzugt gegen eine neue Last auszutauschen. Insbesondere ist der Druckkörper als Schwimmköper ausgestaltet.

Vorteilhafte Ausgestaltungen und Weiterbildungen der Erfindung sind den Unteransprüchen sowie der Beschreibung unter Bezugnahme auf die Zeichnungen entnehmbar.

In einer weiteren Ausführungsform der vorliegenden Erfindung ist es vorgesehen, dass das Unterwasserfahrzeug autonom und/oder ferngesteuert betreibbar ist. Insbesondere erfolgt die Aufnahme der Last durch das Unterwasserfahrzeug selbstständig, d. h. insbesondere nicht ferngesteuert, wodurch in vorteilhafter Weise auf eine Fernsteuerung des Unterwasserfahrzeugs mit seinen bekannten Nachteilen verzichtet werden kann. Es kann aber auch von Vorteil sein, zumindest teilweise über eine Fernsteuerung das Unterwasserfahrzeug zu steuern. Beispielsweise ist es vorstellbar, dass über eine Fernsteuerung eine Kurskorrektur vorgenommen wird.

Erfindungsgemäß ist es vorgesehen, dass das Unterwasserfahrzeug ein Lasttransportsystem zur Aufnahme der Last vom Meeresgrund, zum Absetzen der Last am Meeresgrund und/oder zur Beförderung der Last innerhalb des Staubereichs aufweist. Dadurch lässt sich in vorteilhafter Weise das Austauschen einer am Meeresgrund angeordneten Last unkompliziert durchführen.

In einer weiteren Ausführungsform der vorliegenden Erfindung ist es vorgesehen, dass das Unterwasserfahrzeug zur Energieversorgung des Unterwasserfahrzeugs eine Brennstoffzellenanlage umfasst. Durch die Brennstoffzellenanlage lässt sich in vorteilhafter Weise eine Energieversorgung zur Verfügung stellen, mit der lange Tauchzeiten realisierbar sind. Vorzugsweise werden einzelne für den Betrieb der Brennstoffzelle erforderliche Treibstoffe (Edukte), wie beispielsweise Sauerstoff und Wasserstoff getrennt voneinander jeweils in Tanks gelagert. Umfasst das Unterwasserfahrzeug mehrere Druckkörper ist es zudem denkbar, dass die für den Betrieb der Brennstoffzellenanlage erforderlichen Treibstoffe (Edukte) in verschiedenen Druckkörpern mitgeführt werden.

In einer weiteren Ausführungsform der vorliegenden Erfindung ist es vorgesehen, dass für große Tauchtiefen der Druckkörper aus einem faserverstärktem Kunststoff (z.B. kohlenstofffaserverstärkter Kunststoff), Titan und/oder aus einem Verbund dieser Materialien gefertigt ist. Insbesondere kann für den Druckkörper ein Titanendboden vorgesehen werden. Durch die Verwendung von faserverstärktem Kunststoff und/oder Titan als Materialien für den Druckkörper kann das Unterwasserfahrzeug mit so hohen Drücken beaufschlagt werden, dass ein Tauchgang in mehrere tausend Metern ermöglicht wird. Dadurch lässt sich in vorteilhafter Weise auch ein tief gelegener Meeresgrund mit dem Unterwasserfahrzeug erreichen.

In einer weiteren Ausführungsform der vorliegenden Erfindung ist es vorgesehen, dass der Staubereich eine an einer Unterseite des Unterwasserfahrzeugs angeordnete untere Luke und/oder eine an einer Oberseite des Unterwasserfahrzeugs angeordnete obere Luke aufweist. Insbesondere ist es vorgesehen, dass die untere Luke für die Aufnahme der am Meeresgrund angeordneten Lasten bzw. für deren Austausch gegen neue Lasten vorgesehen ist. Die obere Luke ist vorzugsweise vorgesehen für eine Entnahme oder ein Bestücken des Staubereichs, wenn sich das Unterwasserfahrzeug an der Wasseroberfläche, auf einem Schiff und/oder auf einer Plattform befindet. Vorzugsweise ist die obere Luke größer dimensioniert als die untere Luke. Insbesondere ist die obere Luke für die simultane Entnahme von und/oder das simultane Bestücken mit mehreren Lasten vorgesehen, während durch die untere Luke die Last jeweils einzeln aufnehmbar bzw. austauschbar ist. Weiterhin ist es denkbar, dass die obere Luke und/oder die untere Luke verschließbar sind und entsprechend für die Aufnahme und/oder Abgabe von Lasten geöffnet wird und beispielsweise für die Zeit während des Tauchgangs zwischen zwei Zielpositionen geschlossen wird.

In einer weiteren Ausführungsform der vorliegenden Erfindung ist es vorgesehen, dass das Lasttransportsystem eine Hebevorrichtung, vorzugsweise einen Kran, zum Transport der Last entlang einer im Wesentlichen horizontalen Richtung aufweist, wobei das Lasttransportsystem eine Aufnahmevorrichtung, vorzugsweise eine Saugglocke oder einen Greifer, umfasst. Dadurch lässt sich die Last in vorteilhafter Weise, beispielsweise direkt vom Meeresboden, anheben und durch die untere Luke in den Staubereich befördern bzw. durch die geöffnete untere Luke aus dem Staubereich aus dem Unterwasserfahrzeug herausbefördern und auf dem Meeresgrund absetzen. Die Hebevorrichtung mit der Aufnahmevorrichtung lässt sich auch in vorteilhafter Weise für den Transport von Lasten innerhalb des Staubereichs nutzen. Dadurch ist es in vorteilhafter Weise möglich, Lasten innerhalb des Staubereichs, beispielsweise während einer Tauchfahrt zwischen zwei Zielpositionen, zu sortieren und durch die neu geschaffene Ordnung den Austausch von Lasten an der Zielposition zu erleichtern bzw. zu beschleunigen. Weiterhin ist es denkbar, dass das Lasttransportsystem derart konfiguriert ist, dass das Lasttransportsystem zielpositionsabhängig diejenige Last aus der Vielzahl an im Staubereich verstauten Lasten auswählt, die für die jeweilige Zielposition vorgesehen ist.

In einer weiteren Ausführungsform der vorliegenden Erfindung ist es vorgesehen, dass das Lasttransportsystem ein Schienensystem zum Transport der Last innerhalb des Staubereichs aufweist. Durch das Schienensystem lässt sich in vorteilhafter Weise die aufgenommene Last innerhalb des Staubereichs, vorzugsweise entlang einer parallel zur Längsachse des Unterwasserfahrzeugs verlaufenden Richtung, transportieren. Insbesondere lässt sich durch die Verwendung des Schienensystems - auch bei einer zum Staubereich vergleichsweise klein dimensionierten unteren Luke - das gesamte zur Verfügung stehende Fassungsvolumen des Staubereichs nutzen. Dabei ist die Hebevorrichtung vorzugsweise über eine entlang des Schienensystems bewegliche Laufkatze mit dem Schienensystem verbunden.

In einer weiteren Ausführungsform der vorliegenden Erfindung ist es vorgesehen, dass das Unterwasserfahrzeug eine Greifvorrichtung aufweist, wobei die Greifvorrichtung einen Fangarm, vorzugsweise mehrere Fangarme, zum Fangen eines an der Last befestigten Seils umfasst wobei das Unterwasserfahrzeug eine Winde, zum Anheben der Last aufweist, wobei das Unterwasserfahrzeug einen Aufnahmeschlitten zum Anordnen unterhalb der angehobenen Last aufweist, wobei das Unterwasserfahrzeug eine Schneidevorrichtung zum Zerschneiden des Seils aufweist. Dabei ist es insbesondere vorgesehen, dass an der aufzunehmenden Last ein Seil befestigt ist, wobei sich das Seil durch den eigenen Auftrieb oder verursacht durch ein Auftriebselement bzw. einen Auftriebskörper von der am Meeresgrund angeordneten Last in Richtung der Wasseroberfläche erstreckt. Eine Führung am Unterwasserfahrzeug leitet, das zur Wasseroberfläche strebende Seil, den Fangarmen an der Winde der Greifvorrichtung zu, wobei die Führung bevorzugt derart gestaltet ist, dass sie bei einer Bewegung des Unterwasserfahrzeugs in Fahrtrichtung das Seil zumindest teilweise führt. Vorzugsweise befindet sich das Unterwasserfahrzeug beim Einfangen in Bewegung und das Seil wird von den Fangarmen der Winde, aufgenommen. Durch eine Inbetriebnahme der Winde lässt sich die Last vom Meeresboden anheben, indem die Winde das Seil aufwickelt. Insbesondere wird die Last mit der Winde so lange angehoben, bis der Aufnahmeschlitten, der vorzugsweise entlang einer im Wesentlichen parallel zur Längsachse des Unterwasserfahrzeugs verlaufenden Richtung verschiebbar ist, unterhalb der angehobenen Last platzierbar ist. Weiterhin ist es vorgesehen, dass der Aufnahmeschlitten reversibel zwischen einer ersten Betriebsstellung, in der der Aufnahmeschlitten zumindest teilweise unterhalb der Greifvorrichtung angeordnet ist, und einer zweiten Betriebsstellung, in der der Aufnahmeschlitten zumindest teilweise unterhalb der unteren Luke angeordnet ist, verschiebbar ist. Insbesondere wird die erste Betriebsstellung eingenommen, sobald die Last durch die Winde angehoben ist. Anschließend wickelt die Winde in einem fortgesetzten Betrieb das Seil wieder ab, bis die Last auf dem Aufnahmeschlitten in der ersten Betriebsstellung positioniert ist. Anschließend wird der Aufnahmeschlitten in die zweite Betriebsstellung überführt. Die Last lässt sich dann in vorteilhafter Weise durch die Hebevorrichtung von dem Aufnahmeschlitten in der zweiten Betriebsstellung in den Staubereich aufnehmen. Insbesondere lässt sich durch die Greifvorrichtung die Aufnahme der Last während einer Tauchfahrt, d. h. mit einem sich bewegenden Unterwasserfahrzeug, realisieren. Dadurch kann in vorteilhafter Weise auf ein zeitintensives Manövrieren verzichtet werden, mit dem das Unterwasserfahrzeug andernfalls so lange ausgerichtet werden müsste, bis die untere Luke oberhalb der am Meeresgrund angeordneten Last angeordnet ist.

Erfindungsgemäß ist es vorgesehen, dass das Unterwasserfahrzeug mehrere Druckkörper aufweist, wobei zwischen dem Druckkörper und einem weiteren Druckkörper der Staubereich angeordnet ist. Vorzugsweise ist der Staubereich derart zwischen dem Druckkörper und dem weiteren Druckkörper angeordnet, dass der Staubereich zumindest teilweise steuerbord- und/oder backbordseitig durch die Druckkörper vor Einflüssen aus der Umgebung geschützt wird. Insbesondere ist es vorgesehen, dass die Höhe der Druckkörper im Wesentlichen die Höhe des Unterwasserfahrzeugs vorgibt und die Druckkörper jeweils über mindestens ein Verbindungselement starr mit dem Staubereich verbunden sind.

In einer weiteren Ausführungsform der vorliegenden Erfindung ist es vorgesehen, dass das Unterwasserfahrzeug Antriebs- und Manövriervorrichtungen umfasst. Mittels der Antriebs- und Manövriervorrichtungen lässt sich das Unterwasserfahrzeug nicht nur zwischen zwei Zielpositionen bewegen, sondern es lässt sich eine stabile Ausrichtung des Unterwasserfahrzeugs erzielen, mit der sich die Last sicher in den Staubereich aufnehmen lässt. Beispielsweise umfasst das Unterwasserfahrzeug als Antriebs- und Manövriervorrichtungen bevorzugt mehrere schwenkbare Strahlruderantriebe (engl. Thruster), Tauch- sowie Trimm- und/oder Regelzellen.

In einer weiteren Ausführungsform der vorliegenden Erfindung ist es vorgesehen, dass das Unterwasserfahrzeug eine Hochdruckpumpe zum Leeren bzw. Lenzen und Füllen bzw. Fluten einer Tauch-, Trimm- und/oder Regelzelle umfasst.

In einer weiteren Ausführungsform der vorliegenden Erfindung ist es vorgesehen, dass das Unterwasserfahrzeug eine Steuereinheit für den autonomen Betrieb des Unterwasserfahrzeugs bei seinem Tauchgang umfasst und/oder dass das Unterwasserfahrzeug zur Umgebungsbeobachtung eine Bilderfassungseinheit aufweist. Mit Hilfe der Bilderfassungseinheit, beispielsweise einer Kamera oder einem bildgebenden Sensorsystem, lässt sich das Unterwasserfahrzeug zur Überwachung von am Meeresgrund angeordneten Werkzeugen bzw. Utensilien nutzen. Beispielsweise lassen sich Pipelines beobachten bzw. prüfen, die für die Förderung von Kohlenwasserstoffen vorgesehen sind.

In einer weiteren Ausführungsform der vorliegenden Erfindung ist es vorgesehen, dass entlang der Längsrichtung des Unterwasserfahrzeugs die Länge des Staubereichs im Wesentlichen der Länge des Druckkörpers entspricht. Dadurch wird der Staubereich steuerbordseitig bzw. backbordseitig großflächig durch die Druckkörper geschützt, ohne dass er vollständig von einem Druckkörper umgeben werden muss. Außerdem lassen sich an dem Druckkörper bevorzugt die Antriebs- und Manövriervorrichtungen anordnen. Durch das gleichmäßige Verteilen der Antriebs- und Manövriervorrichtungen entlang der Längsachse des Staubereichs kann in vorteilhafter Weise eine ungleichmäßige Lastverteilung im Staubereich kompensiert werden. Andernfalls könnte unter Umständen eine ungleichmäßige Lastverteilung zu einem Verkippen des Unterwasserfahrzeugs führen, wenn die Antriebs- und Manövriervorrichtungen nur auf einen, vergleichsweise kleinen, Bereich beschränkt sind. Insbesondere lässt sich durch die gleichmäßige Verteilung der Antriebs- und/oder Manövriervorrichtung eine möglichst große Gesamtlast, beispielsweise bestehend aus der Vielzahl an im Staubereich verstauten Lasten, befördern. Außerdem kann sich das Unterwasserfahrzeug durch die gleichmäßige Verteilung möglichst flexibel und unkompliziert bewegen.

In einer weiteren Ausführungsform der vorliegenden Erfindung ist es vorgesehen, dass das Unterwasserfahrzeug konfiguriert ist für einen von einer Offshore-Plattform oder einem Schiff ausgehenden Einsatz. Vorzugsweise sind auch das Schiff und/oder die Offshore-Plattform für die Aufnahme des Unterwasserfahrzeugs ausgelegt. Vorzugsweise sind Anschlüsse vorgesehen, über die Brennstoffzellentreibstoffe (Edukte) in die entsprechenden Brennstoffzellentanks des Unterwasserfahrzeugs einfüllbar sind. Vorzugsweise wird das Unterwasserfahrzeug im Moonpool eines Schiffes oder einer Offshore-Plattform, an Deck eines Schiffes oder Offshore-Plattform oder in einem internen Schwimmdock bzw. einem Welldeck eines Schiffes oder Offshore-Plattform befüllt und/oder betankt. Vorzugsweise erfolgt das Befüllen oder Betanken bei ruhigem Seegang. Für weitere Wartungsarbeiten, wie beispielsweise das Reinigen von Bilderfassungseinheiten, sind Taucher vorgesehen oder das Unterwasserfahrzeug wird mittels einer leistungsstarken Hebevorrichtung an Deck der Offshore-Plattform bzw. des Schiffs gehoben.

Ein weiterer Gegenstand der vorliegenden Erfindung ist ein Verfahren zur Aufnahme einer Last vom Meeresgrund mit einem erfindungsgemäßen Unterwasserfahrzeug wobei die Last mit dem Lasttransportsystem aufgenommen wird.

Im Gegensatz zum Stand der Technik lässt sich das Verfahren durch den geeignet gewählten Staubereich an verschiedenen Zielpositionen während eines Tauchgangs wiederholen. Dadurch lässt sich das Verfahren in vorteilhafter Weise dazu nutzen, flächendeckend Lasten am Meeresgrund auszutauschen.

In einer weiteren Ausführungsform ist es vorgesehen, dass im Vorfeld der Aufnahme, d. h. zeitlich vor der Aufnahme der am Meeresgrund angeordneten Last, das Unterwasserfahrzeug bis zur Ausrichtung der unteren Luke oberhalb der Last manövriert wird.

In einer weiteren Ausführungsform der vorliegenden Erfindung ist es vorgesehen, dass im Vorfeld der Aufnahme ein an der Last befestigtes Seil von einer Greifvorrichtung des Unterwasserfahrzeugs gegriffen wird, wobei die Last über das Seil mittels der Winde angehoben wird, wobei der Aufnahmeschlitten unterhalb der angehobenen Last angeordnet wird, wobei die Last mittels der Winde auf dem Aufnahmeschlitten abgesetzt wird und der Aufnahmeschlitten mit der abgesetzten Last derart bewegt wird, dass die Last unterhalb der unteren Luke angeordnet wird. Insbesondere ist es vorgesehen, dass die Last vom Meeresgrund während der Tauchfahrt, also mit einem sich in Bewegung befindlichen Unterwasserfahrzeug, aufgenommen wird. Dadurch lässt sich in vorteilhafter Weise beim Aufnehmen der Last Zeit sparen.

Ein weiterer Gegenstand der vorliegenden Erfindung ist ein Verfahren zum Absetzen einer Last am Meeresgrund mit einem erfindungsgemäßen Unterwasserfahrzeug, wobei die Last mit dem Lasttransportsystem auf dem Meeresgrund abgesetzt wird. Durch den geeignet gewählten Staubereich lässt sich eine Vielzahl an Lasten am Meeresgrund unkompliziert während eines Tauchgangs absetzen.

In einer weiteren Ausführungsform der vorliegenden Erfindung ist es vorgesehen, dass die an der Aufnahmevorrichtung befestigte Last durch die untere Luke befördert wird und auf dem Meeresgrund abgesetzt wird.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Figur 1** zeigt ein Unterwasserfahrzeug in einer ersten beispielhaften Ausführungsform der vorliegenden Erfindung in einer senkrecht zur Längsachse des Unterwasserfahrzeugs verlaufenden Schnittansicht.

Die **Figur 2** zeigt das Unterwasserfahrzeug der ersten beispielhaften Ausführungsform der vorliegenden Erfindung in einer parallel zur Längsachse des Unterwasserfahrzeugs verlaufenden schematische Draufsicht.

Die **Figur 3** zeigt das Unterwasserfahrzeug der ersten beispielhaften Ausführungsform der vorliegenden Erfindung in einer Seitenansicht und einer Draufsicht.

Die **Figur 4** zeigt einen Druckkörper für ein Unterwasserfahrzeug gemäß einer zweiten beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

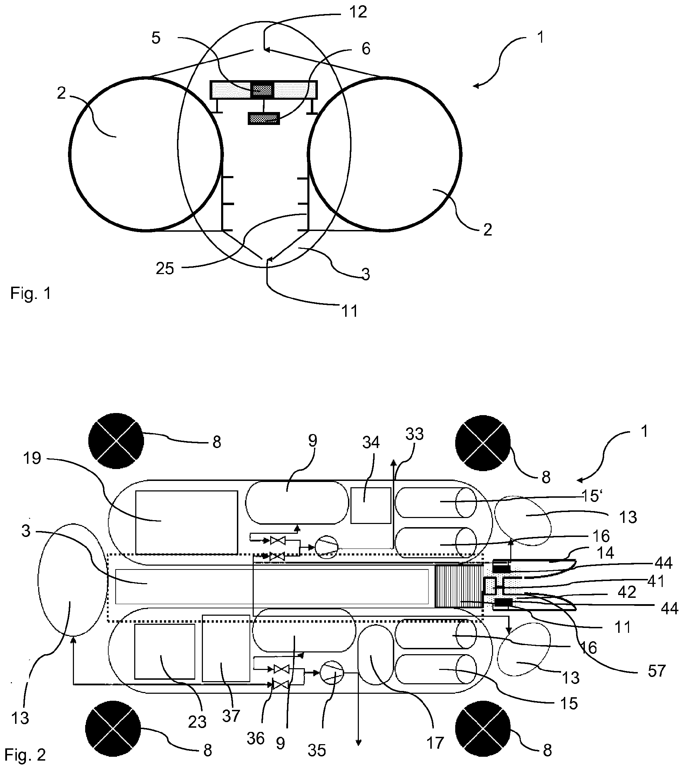

In **Figur 1** ist ein Unterwasserfahrzeug 1 in einer ersten beispielhaften Ausführungsform der vorliegenden Erfindung in einer senkrecht zur Längsachse des Unterwasserfahrzeugs 1 verlaufenden Schnittansicht dargestellt. Ein solches Unterwasserfahrzeug 1 ist vorzugsweise für das Aufnehmen, das Lagern, den Transport und das Abgeben von Lasten 56 vorgesehen, wobei das Unterwasserfahrzeug 1 Lasten 56 aufnimmt, lagert, transportiert und abgibt. Insbesondere ist das Unterwasserfahrzeug 1 ausgelegt für das Aufnehmen und Absetzen von Lasten 56, die auf einem Meeresgrund in großer Tiefe angeordnet sind bzw. werden sollen. Dabei ist das Unterwasserfahrzeug 1 derart konfiguriert, dass es mehrere Zielpositionen ansteuert, dort Lasten 56 aufnimmt und/oder absetzt und vorzugsweise die aufgenommenen Lasten 56 lagert bzw. verwaltet. Für das Lagern der Lasten 56 weist das Unterwasserfahrzeug 1 einen Staubereich 3 auf, der vorzugsweise Sortierhilfen, wie beispielsweise Regale 25, und Arretiervorrichtungen (nicht dargestellt) aufweist, um die aufgenommenen Lasten 56 geschützt vor Seeschlag oder Schocks sicher lagern und transportieren zu können. Vorzugsweise handelt es sich bei den Lasten 56 um Betriebsstoffe, die beispielsweise für die Förderung von Kohlenwasserstoffen unter Wasser vorgesehen sind, wie z. B. Hydraulikflüssigkeiten und/oder Flüssigkeiten zur Sicherung des Ölflusses in einer Förderleitung, oder um seismische Sensoren. Dabei ist es vorgesehen, dass das Unterwasserfahrzeug 1 derart konfiguriert ist, das es mehrere Zielpositionen, wie beispielsweise mehrere Ablageorte für seismische Sensoren oder verschiedene Unterwasserproduktionsstätten, autonom oder ferngesteuert anfahren kann. Beispielsweise ist es vorgesehen, dass das Unterwasserfahrzeug 1 selbstständig an einer der Unterwasserproduktionsstätten einen leeren Behälter als Last 56 aufnimmt und gegen einen vollen Behälter austauscht. Insbesondere ist es vorgesehen, dass das Unterwasserfahrzeug 1 einen Staubereich 3 aufweist, der für die Lagerung von einer Vielzahl an Lasten 56 vorgesehen ist. Dabei ist es vorzugsweise vorgesehen, dass der Staubereich 3 als ein Nassstauraum ausgestaltet ist, d. h. der Staubereich 3 ist vorzugsweise dauerhaft vom Meereswasser geflutet bzw. durchflutet. Vorzugsweise umfasst der Staubereich 3 an seiner zum Meeresgrund gewandten Seite eine untere Luke 11 und eine an seiner (beim Tauchgang) zur Meeresoberfläche zugewandten Seite obere Luke 12, über die bevorzugt Lasten 56 und/oder Werkzeuge in den Staubereich 3 eingeführt oder aus diesem entnommen werden können. Zur Aufnahme und/oder zum Absetzen der Last ist eine Hebevorrichtung 5, vorzugsweise ein Kran, vorgesehen, wobei die Hebevorrichtung 5 mittels einer Aufnahmevorrichtung 6, wie beispielsweise einer Saugglocke oder einem Greifer, die Last 56 aufnimmt und dann die Last 56 in den Staubereich 3 hineinbefördert, aus dem Staubereich 3 herausbefördert und/oder innerhalb des Staubereichs 3 befördert. Weiterhin ist es vorzugsweise vorgesehen, dass weiteres Equipment, das beispielsweise für die Steuerung des Unterwasserfahrzeugs 1 erforderlich ist, in einem Druckkörper 2 angeordnet ist. Insbesondere ist der Druckkörper 2 räumlich getrennt vom Staubereich 3. Mit anderen Worten: der Staubereich 3 ist außerhalb des Druckkörpers 2 angeordnet. In der in Figur 1 dargestellten ersten Ausführungsform ist der Staubereich 3 zwischen zwei Druckkörpern 2 angeordnet, wobei die Druckkörper 2 jeweils mit dem Staubereich 3 fest, insbesondere starr, verbunden sind. Dabei ist es vorgesehen, dass eine Höhe des Staubereichs 3 im Wesentlichen einer Höhe der Druckkörper 2 entspricht und die beiden Druckkörper 2 und der Staubereich 3 in einer Ebene angeordnet sind. Durch diese Anordnung wird der Staubereich 3 zumindest steuer- und backbordseitig von den Druckkörpern 2 umgeben und damit durch diese zumindest teilweise geschützt.

In **Figur 2** ist das Unterwasserfahrzeug 1 der ersten beispielhaften Ausführungsform der vorliegenden Erfindung in einer parallel zur Längsachse des Unterwasserfahrzeugs 1 verlaufenden schematische Draufsicht dargestellt. Zu erkennen ist, dass sich der Staubereich 3 in einer parallel zur Längsachse verlaufenden Längsrichtung über mehr als die Hälfte der Gesamtlänge des Unterwasserfahrzeugs 1 erstreckt. Weiterhin ist es vorgesehen, dass das Unterwasserfahrzeug 1 Antriebs- und Manövriervorrichtungen, wie beispielsweise Thruster 8, Trimm- und/oder Regelzellen 9 sowie Tauchzellen 13 umfasst, mit denen das Unterwasserfahrzeug 1 beim Tauchgang ausgerichtet bzw. bewegt werden, d. h. manövriert werden kann. Insbesondere ist es vorgesehen, dass die Antriebs- und Manövriervorrichtungen, beispielsweise die Thruster 8, entlang einer parallel zur dargestellten Schnittebene verlaufenden Umlaufrichtung am Unterwasserfahrzeug 1, insbesondere an dessen Außenverschalung, angeordnet sind. Vorzugsweise sind die Thruster 8 schwenkbar an der Außenverschalung des Unterwasserfahrzeugs 1 angebracht, um das Unterwasserfahrzeug 1 möglichst flexibel beim Tauchgang manövrieren zu können. Zur Realisierung von Tauchgängen, bei denen mehrere Zielpositionen angefahren werden sollen, ist es vorgesehen, das Unterwasserfahrzeug mittels einer Brennstoffzellenanlage mit Energie zu versorgen. Vorzugsweise sind für die Realisierung der Brennstoffzellenanlage Brennstofftanks 15,15' in den Druckkörpern 2 integriert. Insbesondere ist Wasserstoff in dem Brennstofftank 15 des einen der Druckkörper und Sauerstoff im dem Brennstofftank 15' des anderen der Druckkörper integriert. Zur Erzeugung der für den Betrieb erforderlichen Energie sind weiterhin Reaktionswasserzellen 16 in den Druckköpern 2 vorgesehen. Weiterhin beherbergen die Druckkörper 2 bevorzugt weiteres Equipment, wie beispielsweise eine Steuerung 23, eine Hydraulikdruckstation 34, eine, bevorzugt mehrere, Hochdruck-Trimm- und Lenzpumpen 35, einen Energiespeicher 19, Regelzellen 9, eine außenluftunabhängige Antriebsanlage 37 oder einen Druckspeicher 17, wobei die einzelnen Druckkörper 2 vorzugsweise mit unterschiedlichem weiteren Equipment bestückt sind. Weiterhin ist es vorgesehen, dass das Unterwasserfahrzeug 1 eine, bevorzugt mehre, Hochdruckpumpen 35 umfasst, mit denen die Trimm- und Regelzellen sowie die Tauchzellen gegen den Außendruck entleert oder geflutet werden. Zur Regulierung der Füllstände in den einzelnen Trimm- und Regelzellen 9 sowie den Tauchzellen 13 sind die Tauch-, Trimm- und Regelzellen über Ventilen 36 mit der Hochdruckpumpe 35 verbunden. Das Wasser aus den Tauch-, Trimm- und Regelzellen wird über die Hochdruckpumpe 35 gegen den Außendruck über die Druckleitung 33 nach Außen gepumpt.

Weiterhin ist es vorgesehen, dass das Unterwasserfahrzeug 1 eine Greifvorrichtung zur Aufnahme der Lasten 56 aufweist. Insbesondere umfasst die Greifvorrichtung eine Winde 41 mit einem oder mehreren Fangarmen 57. In Figur 2 ist weiterhin eine Führung 14 dargestellt. Die Führung 14 wird aus zwei geschwungenen Vorsprüngen beidseitig der Mittschiffseben gebildet, deren Abstand zueinander in Richtung der Winde 41 geringer wird. Durch die zulaufende Ausgestalteng der Führung 14 kann das Unterwasserfahrzeug 1 an der Zielposition auf ein Seil 53, an dessen unterem Ende die Last 56 angeordnet ist, zufahren. Insbesondere bildet die Führung 14 ein Leitsystem für das Seil 53, wodurch bei einer Vorwärtsbewegung des Unterwasserfahrzeugs 1 das Seil 53 in Richtung einer Winde 41 des Unterwasserfahrzeug 1 befördert wird. Die Winde 41 ist vorzugsweise dafür vorgesehen, das Seil 53 aufzunehmen und anschließend durch ihren Betrieb die Last 56 über ein Aufwickeln des Seils 53 anzuheben. Insbesondere ist es vorgesehen, dass die Winde 41 so lange die Last 56 anhebt, bis ein Aufnahmeschlitten 42 des Unterwasserfahrzeugs 1 unter die Last 56 beförderbar ist. Der vorzugsweise entlang der Längsrichtung des Unterwasserfahrzeugs 1 bewegliche Aufnahmeschlitten 42 untergreift die angehobene Last 56 zumindest teilweise. Anschließend lässt sich die Last 56 durch die Winde 41, insbesondere durch Betätigen von deren Windenmotor, auf dem Aufnahmeschlitten 42 absetzen. Insbesondere wird dann das Seil 53 mittels einer Schneidevorrichtung bzw. einem Cutter 44 zertrennt und anschließend der Aufnahmeschlitten 42 so lange verschoben, bis die Last 56 unterhalb der unteren Luke 11 platziert ist. Durch die geöffnete untere Luke 11 lässt sich mittels der Hebevorrichtung 5 die Last 56 in den Staubereich 3 des Unterwasserfahrzeugs 1 aufnehmen. Insbesondere schließt sich ein Bereich der unteren Luke 11 unmittelbar an einen Bereich mit der Greifvorrichtung an. Es ist dabei denkbar, dass die untere Luke 11 für die Aufnahme einer einzelnen Last dimensioniert ist und die Hebevorrichtung 5 dafür sorgt, dass die Last 56 im Staubereich 3 an den vorgesehenen Platz gebracht wird. Es ist weiterhin vorgesehen, dass das Unterwasserfahrzeug 1 Lasten 56 aufnimmt, indem das Unterwasserfahrzeug 1 so lange manövriert wird, bis die aufzunehmende Last 56 unterhalb der unteren Luke 11 angeordnet ist. Anschließend lässt sich die am Meeresgrund angeordnete Last 56 unmittelbar über die Hebevorrichtung 5 in den Staubereich 3 befördern.

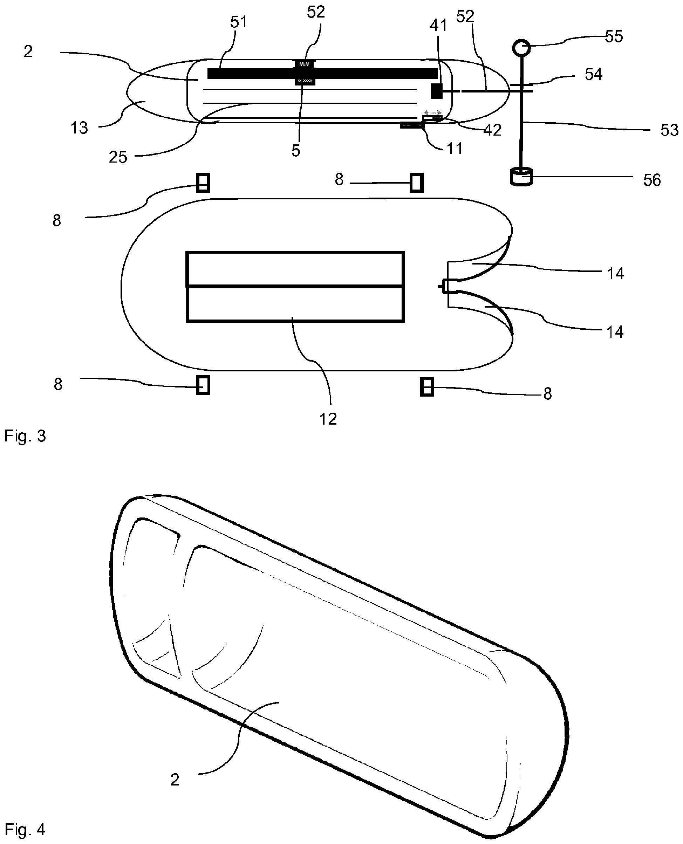

In **Figur 3** ist das Unterwasserfahrzeug 1 der ersten beispielhaften Ausführungsform der vorliegenden Erfindung in einer Seitenansicht und einer Draufsicht dargestellt. Vorzugsweise umfasst das Unterwasserfahrzeug 1 im Staubereich 3 ein Schienensystem 51, entlang dem die Hebevorrichtung 5 bewegbar ist. Insbesondere ist das Schienensystem 51 derart konfiguriert bzw. ausgerichtet, dass die Hebevorrichtung 5, beispielsweise über eine Laufkatze 52, entlang einer im Wesentlichen parallel zur Längsrichtung des Unterwasserfahrzeugs 1 verlaufenden Richtung bewegbar ist. Dadurch lässt sich beispielsweise eine in einem vorderen Teil des Unterwasserfahrzeugs 1 aufgenommene Last 56 in einen hinteren Teil des Unterwasserfahrzeugs 1 befördern, um die Last 56 dort zu verstauen. Dadurch lässt sich der Bauraum der unteren Luke 11 in vorteilhafter Weise für die Aufnahme einer einzelnen Last 56 einschränken und gleichzeitig das gesamte Fassungsvermögen des Staubereichs 3 für eine Vielzahl an Lasten 56 vollständig nutzen. Mit einer kleinen unteren Luke lässt sich der Staubereich 3 zudem gut schützen vor äußeren Einflüssen beim Aufnehmen oder Absetzen der Last. Vorzugsweise ist das Seil 53, an dessen unterem Ende die Last 56 am Meeresgrund befestigt ist, am oberen Ende mit einem Auftriebskörper 55 verbunden. Dieser Auftriebskörper 55 sorgt vorzugsweise dafür, dass sich das Seil 53 - möglichst bewegungsarm - vom Meeresgrund zur Meeresoberfläche hin erstreckt. Vorzugsweise umfasst das Seil 53 weiterhin ein Begrenzungsmittel 54, wobei der Bereich unterhalb des Begrenzungsmittels 54 den Bereich des Seils 51 festlegt, den die Greifvorrichtung greifen darf. Denkbar ist auch, dass das Begrenzungsmittel 54 einen Sender umfasst, der dem Unterwasserfahrzeug zur Orientierung dient bzw. eine Navigation des Unterwasserfahrzeugs 1 mitsteuert. Weiterhin umfasst das Unterwasserfahrzeug 1 eine obere Luke 12. Über die obere Luke 12 werden die Lasten vorzugsweise aus dem Staubereich 3 heraus- bzw. in den Staubereich hineinbefördert, wenn sich das Unterwasserfahrzeug 1 an der Wasseroberfläche befindet. Insbesondere ist es vorgesehen, dass die obere Luke 12 größer ist als die untere Luke 11, wobei sich die obere Luke 12 im Wesentlichen über die gesamte Erstreckung des darunterliegenden Staubereichs 3 erstreckt.

In **Figur 4** ist ein Druckkörper 2 für ein Unterwasserfahrzeug 1 gemäß einer zweiten beispielhaften Ausführungsform der vorliegenden Erfindung dargestellt. Beispielsweise handelt es sich um einen Druckkörper 2, der für das Unterwasserfahrzeug 1 der ersten beispielhaften Ausführungsform genutzt wird. Es ist hierbei vorgesehen, dass der Druckkörper 2 einen kohlenstoffverstärkten Kunststoff und Titan aufweist. Insbesondere umfasst der Druckkörper 2 Titan-Endböden. Durch diese besonders geeignete Materialwahl und Formgestaltung des Druckkörpers 2 lässt sich in vorteilhafter Weise ein Einsatz des Unterwasserfahrzeugs 1 bis zu mehreren tausend Metern unterhalb der Meeresoberfläche bei seinem Tauchgang realisieren.

### Bezugszeichenliste

- 1: Unterwasserfahrzeug
- 2: Druckkörper
- 3: Staubereich
- 5: Hebevorrichtung
- 6: Aufnahmevorrichtung
- 8: Thruster (drehbarer Strahlruderantrieb)
- 9: Trimm- und Regelzelle
- 11: untere Luke
- 12: obere Luke
- 13: Tauchzelle
- 14: Führung
- 15,15': Brennstofftanks
- 16: Reaktionswasserzelle
- 17: Druckspeicher
- 19: Energiespeicher
- 23: Steuerung
- 25: Regal
- 33: Druckleitung
- 34: Hydraulikdruckstation HPU
- 35: Hochdruck Trimm- und Lenzpumpen
- 36: Ventil
- 37: außenluftunabhängige Antriebsanlage
- 41: Winde
- 42: Aufnahmeschlitten
- 44: Schneidevorrichtung
- 51: Schienensystem
- 52: Laufkatze
- 53: Seil
- 54: Begrenzungsmittel
- 55: Auftriebskörper
- 56: Last
- 57: Fangarm

## Patentansprüche

1. Unterwasserfahrzeug (1) mit einem Staubereich (3) zum Verstauen von Lasten (56),wobei das Unterwasserfahrzeug (1) einen Druckkörper (2) und einen weiteren Druckkörper (2) aufweist, **dadurch gekennzeichnet, dass** der Staubereich (3) außerhalb des Druckkörpers (2) und zwischen dem Druckkörper (2) und dem weiteren Druckkörper (2) angeordnet ist, wobei das Unterwasserfahrzeug (1) konfiguriert ist für die Aufnahme der Last (56) vom Meeresgrund und/oder das Absetzen der Last (56) auf dem Meeresgrund, wobei das Unterwasserfahrzeug (1) ein Lasttransportsystem zur Aufnahme der Last (56) vom Meeresgrund, zum Absetzen der Last (56) am Meeresgrund und zur Beförderung der Last innerhalb des Staubereichs (3) aufweist.

2. Unterwasserfahrzeug (1) gemäß Anspruch 1, wobei das Unterwasserfahrzeug (1) autonom und/oder ferngesteuert betreibbar ist.

3. Unterwasserfahrzeug (1) gemäß einem der vorhergehenden Ansprüche, wobei das Unterwasserfahrzeug (1) zur Energieversorgung des Unterwasserfahrzeugs (1) eine Brennstoffzellenanlage umfasst.

4. Unterwasserfahrzeug (1) gemäß einem der vorhergehenden Ansprüche, wobei der Staubereich (3) eine an einer Unterseite des Unterwasserfahrzeugs (1) angeordnete untere Luke (11) und/oder eine an einer Oberseite des Unterwasserfahrzeugs (1) angeordnete obere Luke (12) aufweist.

5. Unterwasserfahrzeug (1) gemäß einem der vorhergehenden Ansprüche, wobei das Lasttransportsystem eine Hebevorrichtung (5) zum Transport der Last (56) entlang einer im Wesentlichen horizontalen Richtung aufweist, wobei das Lasttransportsystem eine Aufnahmevorrichtung (6) umfasst.

6. Unterwasserfahrzeug (1) gemäß einem der vorhergehenden Ansprüche, wobei das Lasttransportsystem ein Schienensystem (51) zum Transport der Last (56) innerhalb des Staubereichs (3) aufweist.

7. Unterwasserfahrzeug (1) gemäß einem der vorhergehenden Ansprüche, wobei das Unterwasserfahrzeug (1) eine Greifvorrichtung aufweist, wobei die Greifvorrichtung einen Fangarm (14) zum Fangen eines an der Last befestigten Seils (53) umfasst, wobei das Unterwasserfahrzeug (1) eine Winde (41) zum Anheben der Last (56) aufweist, wobei das Unterwasserfahrzeug einen Aufnahmeschlitten (42) zum Anordnen unterhalb der angehobenen Last (56) aufweist, wobei das Unterwasserfahrzeug (1) eine Schneidevorrichtung (44) zum Zerschneiden des Seils (53) aufweist.

8. Unterwasserfahrzeug (1) gemäß einem der vorhergehenden Ansprüche, wobei entlang der Längsachse des Unterwasserfahrzeugs (1) die Länge des Staubereichs (3) im Wesentlichen der Länge des Druckkörpers (2) entspricht.

9. Verfahren zur Aufnahme einer Last (56) vom Meeresgrund mit einem Unterwasserfahrzeug (1) gemäß einem der vorhergehenden Ansprüche, wobei die Last (56) mit dem Lasttransportsystem aufgenommen wird.

10. Verfahren gemäß Anspruch 9, wobei im Vorfeld der Aufnahme das Unterwasserfahrzeug (1) bis zur Ausrichtung der unteren Luke (11) oberhalb der Last (56) manövriert wird.

11. Verfahren gemäß Anspruch 9 oder 10, wobei ein an der Last (56) befestigtes Seil (53) von der Greifvorrichtung des Unterwasserfahrzeugs (1) gegriffen wird, wobei die Last (56) über das Seil (53) mittels der Winde (41) angehoben wird, wobei der Aufnahmeschlitten (42) unterhalb der angehobenen Last (56) angeordnet wird, wobei die Last (56) mittels der Winde (41) auf dem Aufnahmeschlitten (42) abgesetzt wird und der Aufnahmeschlitten (42) mit der abgesetzten Last (56) derart bewegt wird, dass die Last (56) unterhalb der unteren Luke (11) angeordnet wird.

12. Verfahren zum Absetzen einer Last (56) am Meeresgrund mit einem Unterwasserfahrzeug (1) gemäß einem der Ansprüche 1 bis 9 wobei die Last (56) mit dem Lasttransportsystem auf dem Meeresgrund abgesetzt wird.

13. Verfahren gemäß Anspruch 12, wobei die an der Aufnahmevorrichtung (6) befestigte Last (56) durch die untere Luke (11) befördert wird und auf dem Meeresgrund abgesetzt wird.

## Claims

1. Submarine vehicle (1) having a storage area (3) for storing loads (56), wherein the submarine vehicle (1) comprises a pressure hull (2) and a further pressure hull (2), **characterized in that** the storage area (3) is arranged outside the pressure hull (2) and between the pressure hull (2) and the further pressure hull (2), wherein the submarine vehicle (1) is configured to pick the load (56) up from the seabed and/or to set the load (56) down on the seabed, wherein the submarine vehicle (1) comprises a load transporting system for picking the load (56) up from the seabed, for setting the load (56) down on the seabed and for conveying the load within the storage area (3).

2. Submarine vehicle (1) according to Claim 1, wherein the submarine vehicle (1) is operable autonomously and/or by remote control.

3. Submarine vehicle (1) according to one of the preceding claims, wherein the submarine vehicle (1) comprises a fuel cell system for supplying the submarine vehicle (1) with energy.

4. Submarine vehicle (1) according to one of the preceding claims, wherein the storage area (3) comprises a lower hatch (11) arranged on an underside of the submarine vehicle (1) and/or an upper hatch (12) arranged on a top side of the submarine vehicle (1) .

5. Submarine vehicle (1) according to one of the preceding claims, wherein the load transporting system comprises a lifting device (5) for transporting the load (56) in a substantially horizontal direction, wherein the load transporting system comprises a pickup device (6).

6. Submarine vehicle (1) according to one of the preceding claims, wherein the load transporting system comprises a rail system (51) for transporting the load (56) within the storage area (3).

7. Submarine vehicle (1) according to one of the preceding claims, wherein the submarine vehicle (1) comprises a grasping device, wherein the grasping device comprises a catching arm (14) for catching a cable (53) fastened to the load, wherein the submarine vehicle (1) comprises a winch (41) for raising the load (56), wherein the submarine vehicle comprises a pickup carriage (42) for arranging beneath the raised load (56), wherein the submarine vehicle (1) comprises a cutting device (44) for cutting the cable (53).

8. Submarine vehicle (1) according to one of the preceding claims, wherein, along the longitudinal axis of the submarine vehicle (1), the length of the storage area (3) corresponds substantially to the length of the pressure hull (2).

9. Method for picking a load (56) up from the seabed using a submarine vehicle (1) according to one of the preceding claims, wherein the load (56) is picked up with the load transporting system.

10. Method according to Claim 9, wherein, prior to the pickup operation, the submarine vehicle (1) is maneuvered until the lower hatch (11) is oriented above the load (56).

11. Method according to Claim 9 or 10, wherein a cable (53) fastened to the load (56) is grasped by the grasping device of the submarine vehicle (1), wherein the load (56) is raised via the cable (53) by means of the winch (41), wherein the pickup carriage (42) is arranged beneath the raised load (56), wherein the load (56) is set down on the pickup carriage (42) by means of the winch (41) and the pickup carriage (42) with the set-down load (56) is moved such that the load (56) is arranged beneath the lower hatch (11).

12. Method for setting a load (56) down on the seabed using a submarine vehicle (1) according to one of Claims 1 to 9, wherein the load (56) is set down on the seabed with the load transporting system.

13. Method according to Claim 12, wherein the load (56) fastened to the pickup device (6) is conveyed through the lower hatch (11) and set down on the seabed.

## Revendications

1. Véhicule sous-marin (1) avec une zone de rangement (3) pour ranger des charges (56), dans lequel le véhicule sous-marin (1) comporte une coque épaisse (2) et une autre coque épaisse (2), **caractérisé en ce que** la zone de rangement (3) est disposée à l'extérieur de la coque épaisse (2) et entre la coque épaisse (2) et l'autre coque épaisse (2), dans lequel le véhicule sous-marin (1) est configuré pour reprendre la charge (56) depuis le fond marin et/ou pour déposer la charge (56) sur le fond marin, dans lequel le véhicule sous-marin (1) présente un système de transport de la charge pour reprendre la charge (56) depuis le fond marin, pour déposer la charge (56) sur le fond marin et pour transporter la charge (56) à l'intérieur de la zone de rangement (3).

2. Véhicule sous-marin (1) selon la revendication 1, dans lequel le véhicule sous-marin (1) peut fonctionner de façon autonome et/ou télécommandée.

3. Véhicule sous-marin (1) selon l'une quelconque des revendications précédentes, dans lequel le véhicule sous-marin (1) comprend une installation de pile à combustible pour l'alimentation en énergie du véhicule sous-marin (1) .

4. Véhicule sous-marin (1) selon l'une quelconque des revendications précédentes, dans lequel la zone de rangement (3) présente une écoutille inférieure (11) disposée sur un côté inférieur du véhicule sous-marin (1) et/ou une écoutille supérieure (12) disposée sur un côté supérieur du véhicule sous-marin (1).

5. Véhicule sous-marin (1) selon l'une quelconque des revendications précédentes, dans lequel le système de transport de charge comporte un dispositif de levage (5) pour le transport de la charge (56) le long d'une direction essentiellement horizontale, dans lequel le système de transport de charge comprend un dispositif de reprise (6).

6. Véhicule sous-marin (1) selon l'une quelconque des revendications précédentes, dans lequel le système de transport de charge présente un système de rails (51) pour le transport de la charge (56) à l'intérieur de la zone de rangement (3).

7. Véhicule sous-marin (1) selon l'une quelconque des revendications précédentes, dans lequel le véhicule sous-marin (1) présente un dispositif de préhension, dans lequel le dispositif de préhension comprend un bras de capture (14) pour capturer un câble (53) fixé à la charge, dans lequel le véhicule sous-marin (1) présente un treuil (41) pour le levage de la charge (56), dans lequel le véhicule sous-marin (1) présente un chariot de reprise (42) à disposer en dessous de la charge soulevée (56), dans lequel le véhicule sous-marin (1) présente un dispositif de coupe (44) pour trancher le câble (53).

8. Véhicule sous-marin (1) selon l'une quelconque des revendications précédentes, dans lequel la longueur de la zone de rangement (3) correspond essentiellement à la longueur de la coque épaisse (2) le long de l'axe longitudinal du véhicule sous-marin (1).

9. Procédé pour reprendre une charge (56) depuis le fond marin avec un véhicule sous-marin (1) selon l'une quelconque des revendications précédentes, dans lequel on reprend la charge (56) avec le système de transport de charge.

10. Procédé selon la revendication 9, dans lequel avant la reprise on manoeuvre le véhicule sous-marin (1) jusqu'à l'alignement de l'écoutille inférieure (11) au-dessus de la charge (56).

11. Procédé selon une revendication 9 ou 10, dans lequel on saisit un câble (53) fixé à la charge (56) au moyen du dispositif de préhension du véhicule sous-marin (1), dans lequel on soulève la charge (56) à l'aide du câble (53) au moyen du treuil (41), dans lequel on place le chariot de reprise (42) en dessous de la charge soulevée (56), dans lequel on dépose la charge (56) au moyen du treuil (41) sur le chariot de reprise (42) et on déplace le chariot de reprise (42) avec la charge (56) de telle manière que la charge (56) soit déposée en dessous de l'écoutille inférieure (11).

12. Procédé pour déposer une charge (56) sur le fond marin avec un véhicule sous-marin (1) selon l'une quelconque des revendications 1 à 9, dans lequel on dépose la charge (56) sur le fond marin avec le système de transport de charge.

13. Procédé selon la revendication 12, dans lequel on transporte la charge (56) fixée au dispositif de reprise (6) à travers l'écoutille inférieure (11) et on la dépose sur le fond marin.
